**Europäisches Patentamt**

(19) **European Patent Office**

**Office européen des brevets**

(11) Veröffentlichungsnummer: **0 033 471**
**B1**

(12) **EUROPÄISCHE PATENTSCHRIFT**

(45) Veröffentlichungstag der Patentschrift:
**16.05.84**

(21) Anmeldenummer: **81100395.3**

(22) Anmeldetag: **20.01.81**

(51) Int. Cl.³: **H 04 B 3/44**

(54) Schaltungsanordnung zum Schliessen der Fernspeiseschleife einer Fernspeiseeinrichtung.

(30) Priorität: **31.01.80 DE 3003515**

(43) Veröffentlichungstag der Anmeldung:
**12.08.81 Patentblatt 81/32**

(45) Bekanntmachung des Hinweises auf die Patenterteilung:
**16.05.84 Patentblatt 84/20**

(84) Benannte Vertragsstaaten:
**AT BE CH DE FR GB IT LI LU NL SE**

(56) Entgegenhaltungen:
**DE - B - 1 265 215**
**DE - C - 135 159**
**DE - C - 1 012 686**

**SIEMENS-ZEITSCHRIFT, Band 45, 1971, Beiheft
Nachrichten-Übertragungstechnik, ERLANGEN (DE) E.
BRAUN et al.: "Fehlerortung in TF-Kabelstrecken mit
Unterflurverstärkern", Seiten 99-102**

(73) Patentinhaber: **SIEMENS AKTIENGESELLSCHAFT,
Berlin und München Wittelsbacherplatz 2,
D-8000 München 2 (DE)**

(72) Erfinder: **Ziegler, Alfred, Dipl.-Ing., Laimer-Platz 1,
D-8000 München 21 (DE)**

## Schaltungsanordnung zum Schließen der Fernspeiseschleife einer Fernspeiseeinrichtung

Die Erfindung bezieht sich auf eine wie im Oberbegriff des Patentanspruchs 1 angegebene Schaltungsanordnung.

Eine derartige Schaltungsanordnung ist bereits aus der DE-B-1 265 215 bekannt.

Eine Schaltungsanordnung zum Schließen der Fernspeiseschleife einer Fernspeiseeinrichtung ist ferner bereits aus der Siemens-Zeitschrift 45 (1971), Beiheft »Nachrichtenübertragungstechnik«, Seite 102 bekannt. Diese bekannte Schaltung dient zum Schließen einer Fernspeiseschleife für reihengespeiste Unterstationen bei Streckenunterbrechungen. Zur Aufrechterhaltung der Speisung wenigstens in einem Teil des Übertragungssystems ist vorgesehen, daß in jeder Zwischenverstärkerstelle eine Relaisspule und die Verbraucherwiderstände der Verstärker in verschiedenen Fernspeisestrompfaden eingeschleift sind. Die Querverbindung mit dem Relaiskontakt ist über eine Weichenschaltung, bestehend aus je einer den Verbraucherwiderständen und der Relaisspule parallel geschalteten Reihenschaltung von wenistens zwei Dioden hergestellt.

Durch diese Maßnahme soll in Fernspeisesystemen mit gleichmäßiger Lastverteilung die für eine Fehlerortung erforderliche eindeutige Lage von Relaisspule und Querverbindung im Fernspeiseweg unabhängig davon erreicht werden, ob der Relaiszweig des Schaltzusatzes im einen oder anderen Fernspeisezweig angeordnet ist. Der Schaltzusatz ist ein Vierpol, der mit jeweils einem Klemmenpaar an den der Signalquelle zugewandten ersten und an den der Speisestelle abgewandten zweiten Teil der Fernspeiseschleife bzw. des Speiseadernpaares angeschlossen ist. Dadurch, daß die Relaisspule und damit der eine Längszweig des Vierpols von Zwischenverstärkerstelle zu Zwischenverstärkerstelle abwechselnd in den einen oder anderen Fernspeisestrompfad eingefügt ist und die Energieflußrichtung in der Fernspeiseschleife immer gleich ist, ergibt sich für den abwechselnd umgekehrt eingeschleiften Vierpol jeweils ein Wechsel der Energieflußrichtung.

Enthalten die ferngespeisten Stationen, die insbesondere Zwischenverstärkerstellen von Weitverkehrssystemen sein können, sogenannte Schaltzusätze, die im Falle einer Streckenunterbrechung den Fernspeisekreis vor dem fehlerhaften Fernspeiseabschnitt bzw. Verstärkerfeld wieder schließen, so benötigen die hierzu erforderlichen Relais im ungestörten Streckenteil, bzw. bei fehlerfreiem Betrieb auf der gesamten Übertragungsstrecke, eine zum Offenhalten des Schaltkontaktes notwendige Erregungsleistung, die am Orte jeder ferngespeisten Station einen entsprechenden Spannungsabfall zur Folge hat.

Es ist wünschenswert, diesen Spannungsabfall so gering wie möglich zu halten, da er bei vorgegebener maximaler Fernspeisespannung eine entsprechende Verkürzung der Fernspeisereichweite bedingt.

Es ist bekannt, eine Wicklungsumschaltung vorzusehen, mit deren Hilfe bei erregtem Relais ein derart bemessener Teil der Wicklung kurzgeschlossen wird, daß die systemabhängigen Anzugs- und Abfallwerte für das Relais erreicht werden (Siemens-Zeitschrift 45 (1971), Beiheft »Nachrichten-Übertragungstechnik«, Seite 102).

Hierbei steht für die Haltewicklung der Relaisspule in der Praxis nur ein relativ geringer Teil des Wickelraumes zur Verfügung, welcher die erforderliche Halteleistung und damit den dafür nötigen Spannungsabfall an der Wicklung bestimmt.

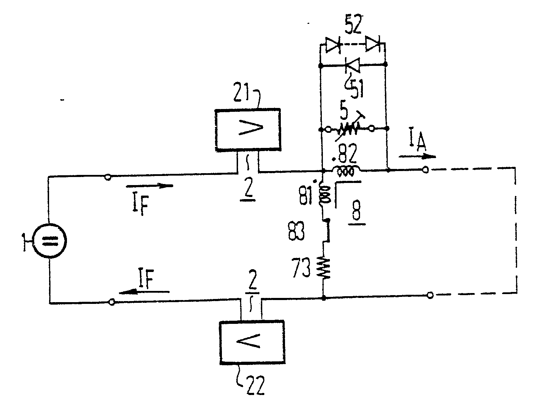

Ein weiter verringerter Spannungsabfall am Relais ergibt sich, wenn eine der beiden Teilwicklungen in der bei geschlossenem Ruhekontakt geschlossenen ersatzweisen Fernspeiseschleife und die andere Teilwicklung in dem unterbrochenen Teil der betriebsmäßigen Fernspeiseschleife liegt. Eine derartige Schaltungsanordnung ist in Fig. 1 der DEAS 1 265 215 gezeigt.

Ist bei einer derartigen Schaltungsanordnung der im Querzweig liegende Ruhekontakt geschlossen, so wird eine der beiden Teilwicklungen vom konstanten Fernspeisestrom durchflossen, so daß das Relais vormagnetisiert wird. Das Relais spricht daher schon mit geringeren Windungszahlen dann an, wenn in der anderen Teilwicklung lediglich ein Ansprechstrom fließt. Es steht dann für die Halteerregung ein besonders großer Wickelraum zur Verfügung. Dadurch ergibt sich ein verringerter Spannungsabfall am Schaltzusatz, so daß sich die Reichweite der Fernspeisung beträchtlich vergrößert. Es kann aber auch bei gleichbleibender Reichweite der Fernspeisung anstelle eines empfindlichen gepolten Relais ein ungepoltes Relais Verwendung finden.

Die Vormagnetisierung des Relais durch den Fernspeisestrom kann jedoch dazu führen, daß das erregte Relais nicht in der gewünschten Weise abfällt.

Aufgabe der Erfindung ist es daher, die Schaltungsanordnung derart auszubilden, daß sich die Vormagnetisierung nicht nachteilig auf das Abfallverhalten des Relais auswirkt.

Man kann die Schaltungsanordnung für einseitig gespeiste Fernspeiseeinrichtungen vorsehen, bei denen die Schaltzusätze immer in der gleichen Weise in die betriebsmäßige Fernspeiseschleife eingefügt sind. Dies ist insbesondere dann der Fall, wenn in Zwischenverstärkerstellen jeweils in beiden Adern der Fernspeiseleitung ein Verstärker als Verbraucher vorhanden ist oder die Verbraucher in ein und derselben Ader der Fernspeiseleitung angeordnet sind. Für derartige Anwendungsfälle wird die Schaltungsanordnung gemäß einem ersten Lösungsweg derart ausgebildet, daß die in der bei geschlossenem Ruhekontakt geschlossene ersatzweisen Fernspeiseschleife liegende Teilwicklung im Querzweig angeordnet ist.

Durch diese Maßnahmen ergibt sich der Vorteil, daß bei erregtem Relais nur eine der beiden Teilwicklungen von einem Strom durchflossen ist, so daß sich eine selbsttätige Variation der für die Durchflutung wirksamen Windungszahl ergibt, ohne daß hierzu eine Umschaltung der Wicklung des Relais erforderlich ist.

In weiterer Ausgestaltung der Erfindung sind der in einem Längszweig liegenden Teilwicklung des Relais bzw. der Wicklung des Relais zum Schutz gegen Beeinflussung Dioden parallel geschaltet. Da hierbei für die eine Polarität die Summe der Schwellenspannungen der Dioden größer als die Ansprechspannung des Relais sein muß, kommt man wegen der Verringerung der Ansprechspannung auch in vorteilhafter Weise mit einer geringeren Zahl von Dioden aus.

Es kann sich ferner als zweckmäßig erweisen, wenigstens eine der beiden Teilwicklungen mit einer Serienschaltung aus einem Arbeitskontakt des Realis und einem Überbrückungszweig zu versehen. Zweckmäßigerweise liegen dabei zwei Arbeitskontakte des Relais jeweils mit ihrem Fußpunkt am Verbindungspunkt der beiden Teilwicklungen und sind mit ihren Arbeitsseiten über je einen der Überbrückungszweige an die äußeren Anschlüsse der Serienschaltung geführt.

Der Überbrückungszweig wird dabei zweckmäßigerweise jeweils so bemessen, daß die vorgegebene Haltebedingung für das Relais gerade noch mit Sicherheit erreicht wird. Zweckmäßigerweise lassen sich Überbrückungszweige wahlweise als ohmscher Widerstand und/oder als Dioden oder als Kurzschlußverbindung ausbilden.

Enthalten die beiden Überbrückungszweige jeweils einen Diodenzweig, so kann man in vorteilhafter Weise den Spannungsabfall an der Wicklung des Relais auf einen nur wenig über den Haltewert des Relais liegende Größe begrenzen.

Die beiden Überbrückungszweige können in unterschiedlicher Weise ausgebildet werden, insbesondere derart, daß nach Ansprechen des Relais die zur Vormagnetisierung dienende Wicklung kurzgeschlossen und die zweite zum Ansprechen dienende Wicklung mit einer oder mehreren Dioden zur Spannungsbegrenzung überbrückt werden. Es können in Abhängigkeit von den Relaiseigenschaften, insbesondere dem Verhältnis Ansprech- zu Abfallerregung und vom Einsatzfall, insbesondere von den Ansprech- und Abfallstrombedingungen, auch andere Beschaltungen vorteilhaft sein.

Es kann sich ferner als zweckmäßig erweisen, die Schaltungsanordnung derart auszubilden, daß zwei Arbeitskontakte des Relais jeweils mit ihrem Fußpunkt am Verbindungspunkt der beiden Teilwicklungen liegen und mit ihren Arbeitsseiten über je einen der Überbrückungszweige an die äußeren Anschlüsse der Serienschaltung geführt sind.

In Weiterbildung der Erfindung kann man bei beidseitiger redundanter Speisung der Fernspeiseschleife und/oder bei einer Anordnung der Wicklung des Relais abwechselnd im einen oder im anderen Zweig der Fernspeiseleitung beide Überbrückungszweige in gleicher Weise ausbilden. Zweckmäßigerweise werden die Kontakte des Relais durch einen Umschaltekontakt gebildet.

Die Erfindung wird anhand des in der Figur dargestellten Ausführungsbeispieles näher erläutert.

Die Figur zeigt einen Schaltzusatz für einseitig gespeiste Fernspeiseschleifen.

Bei der in der Figur gezeigten Schaltungsanordnung werden Zwischenverstärkerstellen über eine mittels der Stromquelle 1 einseitig gespeiste Fernspeiseschleife mit konstantem Gleichstrom ferngespeist. Von den Zwischenverstärkerstellen ist in der Figur nur eine einzige dargestellt. Diese Zwischenverstärkerstelle enthält zwei Verstärker 21 und 22, von denen der eine mit seinem Speiseeingang in die eine Ader und der andere mit seinem Speiseeingang in die andere Ader der Fernspeiseleitung eingeschleift ist. Die Adern der Fernspeiseleitung bzw. die Strompfade der Fernspeiseschleife können z. B. die Innenleiter von Koxialkabeln einer Vierdraht-Nachrichtenübertragungseinrichtung sein.

Die Verstärkerstelle 2 ist mit einem Schaltzusatz versehen, der im Zuge der Fernspeiseleitung auf der der Stromquelle 1 abgewandten Seite der Verstärker 21 und 22 angeordnet ist. Dieser Schaltzusatz enthält ein Relais 8, dessen Wicklung aus zwei zueinander in Serie geschalteten Teilwicklungen besteht, wobei gleichnamige Anschlüsse, z. B. die Wicklungsanfänge, der beiden Teilwicklungen zusammengeführt sind. Der Schaltzusatz bildet einen Vierpol in Form eines Halbgliedes. Der Querzweig des Halbgliedes ist eine Serienschaltung, bestehend aus der Teilwicklung 81, dem Ruhekontakt 83 des Relais 8 und dem Widerstand 73. Der Längszweig ist durch eine Parallelschaltung, bestehend aus der Teilwicklung 82, dem einstellbaren Widerstand 5 und den Diodenzweigen 51 und 52, gebildet.

Wird die Fernspeiseeinrichtung in Betrieb genommen, so ist die Fernspeiseschleife zunächst über den Querzweig des Schaltzusatzes geschlossen. Bei intakter Fernspeiseschleife teilt sich der Fernspeisestrom entsprechend dem Widerstand des Querzweiges und dem Schleifenwiderstand des nachfolgenden Teiles der Fernspeiseschleife auf die beiden Teilwicklungen 81 und 82 auf. Der durch die Teilwicklung 81 fließende Strom bewirkt eine Vormagnetisierung des Relais 8. Der durch die Teilwicklung 82 fließende Strom erzeugt eine zusätzliche Durchflutung, die das Relais 8 bei intakter Fernspeiseschleife zum Ansprechen bringt. Der Ruhekontakt 83 öffnet, so daß der Querzweig stromlos wird und der gesamte Fernspeisestrom über den Längszweig mit der Wicklung 82 fließt.

Der parallel zur Teilwicklung 82 liegende Widerstand 5 dient dazu, die Ansprechwerte der verschiedenen Relais aneinander anzugleichen und wird so gewählt, daß sich beim Nennwert des Fernspeisestromes jeweils der gleiche Ansprechstrom IA ergibt.

Der Diodenzweig 51 besteht aus einer Diode. Diese Diode ist für den Fernspeisestrom in Sperrichtung gepolt. Der dazu antiparallel geschaltete Diodenzweig 52 ist dagegen durch eine Serienschaltung aus so vielen Dioden gebildet, daß die Summe der Schwellenspannungen größer ist als die Spannung, die bei erregtem Relais 8 an der Teilwicklung 82 abfällt. Auf diese Weise wird ein wirksamer Schutz gegen Beeinflussung erzielt.

Der in jeder Zwischenstelle vorgesehene Schaltzusatz schließt bei einer Unterbrechung einer oder beider Speiseadern den Fernspeisekreis vor dieser Unterbrechungsstelle, so daß die vor der Unterbrechungsstelle liegenden Zwischenstellen weiter versorgt werden.

## Patentansprüche

1. Schaltungsanordnung zum selbsttätigen Schließen einer ersatzweisen Fernspeiseschleife bei Unterbrechung der betriebsmäßig vorgesehenen Fernspeiseschleife einer Fernspeiseeinrichtung, die elektrische Verbraucher mittels Gleichstrom-Reihenspeisung speist, wobei die Schaltungsanordnung ein Relais (8) enthält und ein Ruhekontakt (83) des Relais zusammen mit einem Widerstand (73) in einem Querzweig angeordnet ist, die Wicklung des Relais (8) aus zwei in Serie zueinander angeordneten Teilwicklungen (81, 82) besteht und eine der beiden Teilwicklungen (81) in der bei geschlossenem Ruhekontakt geschlossenen ersatzweisen Fernspeiseschleife und die andere Teilwicklung (82) in dem unterbrochenen Teil der betriebsmäßigen Fernspeiseschleife in einem Längszweig auf der der Speisestelle abgewandten Seite des Querzweiges liegt, dadurch gekennzeichnet, daß die in der bei geschlossenem Ruhekontakt (83) geschlossene ersatzweisen Fernspeiseschleife liegende Teilwicklung (81) im Querzweig (81, 83, 73) angeordnet ist.

2. Schaltungsanordnung nach Anspruch 1, dadurch gekennzeichnet, daß der in einem Längszweig liegenden anderen Teilwicklung (82) des Relais (8) zum Schutz gegen Beeinflussung Dioden (51, 52) parallel geschaltet sind.

3. Schaltungsanordnung nach Anspruch 1 oder 2, dadurch gekennzeichnet, daß wenigstens eine der beiden Teilwicklungen (81, 82) mit einer Serienschaltung aus einem Arbeitskontakt des Relais (8) und einem Überbrückungszweig versehen ist.

## Claims

1. A circuit arrangement for automatically closing a substitute remote feeding loop when the remote feeding loop of a remote feeding device provides for normal operation is interrupted, which device feeds electrical loads by d.c. series feeding, where the circuit arrangement comprises a relay (8) and a rest contact (83) of the relay together with a resistor (73) in a shunt arm, the winding of the relay (8) consists of two partial windings (81, 82) arranged in series to one another, and one of the partial windings (81) is arranged in the closed substitute remote feeding loop when the rest contact is closed and the other partial winding (82) is arranged in the interrupted part of the operative remote feeding loop in a longitudinal branch on the side of the shunt arm which faces the feeding point, characterized in that when the rest contact (83) is closed the partial winding (81) arranged in the substitute remote feeding loop is arranged in the shunt arm (81, 83, 73).

2. A circuit arrangement as claimed in claim 1, characterized in that for the protection against interference, diodes (51, 52) are connected parallel to the other partial winding (82) of the relay (8) which is arranged in a longitudinal branch.

3. A circuit arrangement as claimed in claim 1 or 2, characterized in that at least one of the two partial windings (81, 82) is provided with a series connection consisting of an operating contact of the relay (8) and a bridging arm.

## Revendications

1. Montage pour la fermeture automatique d'une boucle d'alimentation à distance de remplacement lors d'une interruption de la boucle d'alimentation à distance, prévue pour le fonctionnement, d'un dispositif d'alimentation à distance qui alimente les appareils d'utilisation électriques avec une alimentation série en continu, dans lequel le montage contient un relais (8), un contact de repos (83) du relais est monté, ainsi qu'une résistance (73), dans une branche transversale, l'enroulement du relais (8) est constitué par deux enroulements partiels (81, 82) branchés mutuellement en série et l'un des deux enroulements partiels (81) est situé dans la boucle d'alimentation à distance de remplacement, fermée lorsque le contact de repos est fermé, et l'autre enroulement partiel (82) est situé dans la partie interrompue de la boucle d'alimentation à distance utilisée pour le fonctionnement, dans une branche longitudinale sur le côté de la branche transversale, situé à l'opposé du poste d'alimentation, caractérisé par le fait que l'enroulement partiel (81), situé dans la boucle d'alimentation à distance de remplacement fermée lorsque le contact de repos (83) est fermé, est disposé dans la branche transversale (81, 83, 73).

2. Montage suivant la revendication 1, caractérisé par le fait que pour obtenir une protection contre toute influence, des diodes (51, 52) sont branchées en parallèle avec l'autre enroulement partiel (82) du relais (8), qui est situé dans une branche longitudinale.

3. Montage suivant la revendication 1 ou 2, caractérisé par le fait qu'au moins l'un des deux enroulements partiels (81, 82) est muni d'un circuit série formé d'un contact de travail du relais (8) et d'une branche de shunt.